Europäisches Patentamt

European Patent Office

Office européen des brevets

(19)

(11) Publication number: **0 277 466 B1**

# EUROPEAN PATENT SPECIFICATION

(12)

(45) Date of publication of the patent specification:
06.06.90

(51) Int. Cl.⁵: **F02B 37/12**

(21) Application number: 87830460.9

(22) Date of filing: 22.12.87

(54) System for controlling the operation of an internal combustion engine provided with a supercharging turbocompressor, particularly for motor vehicles.

(30) Priority: 30.12.86 IT 6799486

(43) Date of publication of application:
10.08.88 Bulletin 88/32

(45) Publication of the grant of the patent:
06.06.90 Bulletin 90/23

(84) Designated Contracting States:
AT BE CH DE ES FR GB GR IT LI LU NL SE

(56) References cited:
FR-A- 2 500 061
FR-A- 2 540 180
GB-A- 2 078 856
GB-A- 2 148 391
US-A- 4 485 626

PATENT ABSTRACTS OF JAPAN, vol. 7,
no. 44 (M-195)[1189], 22nd February 1983; &
JP-A-57 193 720 (TOYOTA JIDOSHA KOGYO
K.K.) 29-11-1982
PATENT ABSTRACTS OF JAPAN, vol. 6,
no. 193 (M-160)[1071], 2nd October 1982; &
JP-A-57 99 234 (HITACHI SEISAKUSHO K.K.) 19-06-1982

(73) Proprietor: MARELLI AUTRONICA S.p.A., Piazza Sant'Ambrogio, 6, I-20123 Milano(IT)

(72) Inventor: Ciliberto, Giuseppe, Via Lancia 138/10, I-10141 Torino(IT)

(74) Representative: Quinterno, Giuseppe et al, c/o Jacobacci-Casetta & Perani S.p.A. Via Alfieri, 17, I-10121 Torino(IT)

## Description

The present invention relates to a system for controlling the operation of an internal combustion engine for motor vehicles provided with supercharging turbocompressors comprising a driving turbine driven by the exhaust gases flowing through the exhaust manifold of the engine, and a compressor for supplying compresed air to the air intake pipe of the engine.

In particular the subject of the invention is a system comprising
an exhaust valve (waste gate) coupled to the exhaust manifold of the engine upstream of the turbine,
a pneumatically controlled actuator device for controlling the opening of the valve in dependence on the pneumatic pressure supplied to an operating chamber of the actuator,
an operating solenoid valve for putting the operating chamber of the actuator into communication with the inlet manifold of the engine,
an electrical pressure sensor coupled to the inlet manifold of the engine,
a plurality of further sensors for supplying electrical signals indicative of the operating conditions of the engine, and
an electronic control unit arranged to actuate the solenoid valve according to a predetermined law in dependence on the signals supplied by the further sensors.

Control systems of this type allow the supercharging pressure to be regulated, through the actuation of the waste-gate valve, in dependence on the values assumed by the parameters detected by the sensors. These systems are of the closed-loop type: as the quantities and parameters being monitored vary, the electronic control unit controls the opening of the waste-gate valve through the operating solenoid valve and the penumatic actuator, thus varying the pressure of the exhaust gases which drive the driving turbine of the turbocompressor. The latter in turn causes a variation in the rate or rotation of the compressor, and thus a corresponding variation in the pressure of the compressed air supplied by the compressor to the air intake pipe of the engine. As a result of the variation in the supercharging pressure of the engine the parameters monitored by the sensors of the system vary. An example of such a system is described in JP-A- 57 193 720.

Control systems of the type described above produced up to now have the disadvantage of being rather slow and unstable. In fact these control systems include a regulating loop, of which the internal combustion engine is a part, which has reaction times which are not constant but which vary according to their operating conditions, some of which are monitored by the electronic control unit of the system through the sensors but some of which are not monitored and cannot, therefore, be taken into account by the control unit.

The object of the present invention is thus to produce a system for controlling the operation of a turbo-charged engine which produces the supercharging pressure value corresponding to the detected operating conditions of the engine more quickly than systems made up to now, and which is also more stable than prior systems.

This object is achieved according to the invention by means of a control system of the type specified above whose principal characteristic lies in the fact that it includes a second pressure sensor for monitoring the pressure supplied to the operating chamber of the actuator, and in that the electronic control unit is arranged
- to acquire the signals provided by the second pressure sensor and to control, in a closed loop, the operation of the solenoid valve in dependence on the signals provided by the second pressure sensor, and
- to acquire the signal output by the first pressure sensor when the further sensor detect the occurrence of a predetermine operating condition of the engine and to modify the predetermine law for operating the solenoid valve in dependence on the signal provided by the first pressure sensor.

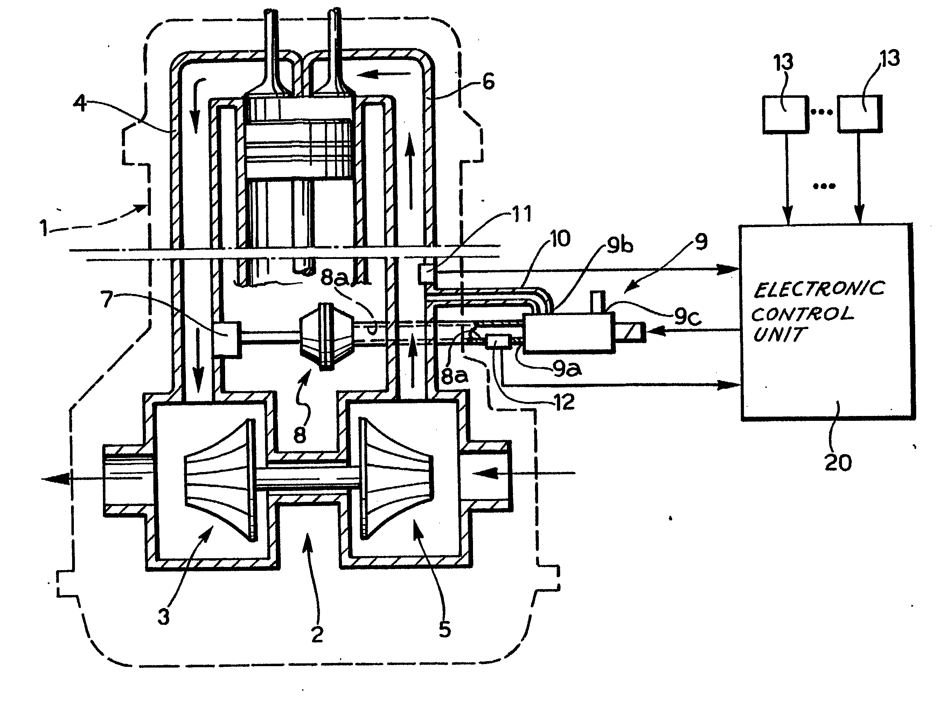

Further characteristics and advantages of the system according to the invention will become clear from the detailed description which follows with reference to the appended drawing, provided purely by way of non-limiting example, which illustrates schematically a system according to the invention.

With reference to the drawing an internal combustion engine provided with a supercharging turbocompressor 2 is generally indicated 1. The turbocompressor comprises a driving turbine 3 driven by the exhaust gases flowing through the exhaust manifold 4 of the engine and a compressor 5 for supplying compressed air to the intake manifold 6 of the engine 1.

An exhaust (waste-gas), indicated 7, is coupled to the exhaust manifold 4 of the engine upstream of the turbine 3. The exhaust valve is opened, in known manner, by a pneumatically-controlled actuator 8. This actuator can comprise, for example, a rigid casing formed by two half shells between which is clamped the periphery of a diaphragm to the central portion of which is attached a push rod or other control mechanism for opening the valve 7. The position of the diaphragm depends, in operating chamber of the actuator, indicated 8a in the drawing. This operating chamber is connected to an outlet 9a of an operating solenoid valve 9 having an inlet 9b communicating with the inlet manifold 6 of the engine through a duct 10. The solenoid valve 9 has an exhaust opening 9c to the atmosphere.

A first electrical pressure sensor coupled to the manifold 6 of the engine is indicated 11. A second electrical pressure sensor 12 is coupled to the operating chamber 8a of the pneumatic actuator 8.

Electrical sensors for providing signals indicative of the operating conditions of the engine are indicated 13. These sensors can comprise for example a sensor for sensing the rate of rotation of the engine, a sensor for sensing the position of the accelerator pedal or or the throttle valve of the carburettor, etc.

The sensors 11 to 13 are connected to corresponding inputs of an electronic control unit 20 produced for example with the use of a microcompressor.

The unit 20 is in turn connected to the energisation coil of the solenoid valve 9.

The unit 20 is arranged by conventional programming techniques to acquire the signals supplied by the pressure sensor 12 which indicate the value assumed by the pressure in the operating chamber 8a of the actuator 8, and to drive the solenoid valve 9 in dependence on the signals supplied by this sensor.

As the operating conditions of the engine signalled by the sensors 13 vary, the unit 20 causes the supercharging pressure of the engine 1 to vary by energising the solenoid valve 9 so as to disconnect the chamber 8a from the atmosphere and put it into communication with the intake manifold 6 of the engine. The pressure in the chamber 8a determines, through the actuator 8, the controlled opening of the exhaust valve 7, to cause the variation in the rate of rotation of the turbine 3 and hence of the compressor 5. The activation of the solenoid valve 9 is not subject to the signal supplied by the sensor 11, as in conventional control systems, but is subject to the signal supplied by the sensor 12. The control system according to the invention is thus a closed-loop system of which the internal combustion engine does not form a part.

The unit 20 controls the solenoid valve 9 according to a predetermined law in dependence on the pressure detected by the sensor 12, this law being prearranged for the internal combustion engine in question so that a certain value of the supercharging pressure in the manifold 6 corresponds to each value of the pressure detected in the operating chamber 8a.

The control unit 20 acquires only periodically the signal provided by the pressure sensor 11 relating to the pressure prevailing in the inlet manifold. On the basis of the signal provided by the sensor 11, the unit 20, if necessary, modifies the predetermined law of activation of the solenoid valve in dependence on the signals supplied by the sensor 12.

The acquisition of the signals supplied by the pressure sensor 11 is effected conveniently when the engine is operating under relatively stable conditions, for example, whilst the vehicle is travelling in a straight line. The occurrence of such stable operating conditions of the engine is detected by the unit 20 on the basis of the information supplied by the sensors 13.

## Claims

A system for controlling the operation of an internal combustion engine (1) provided with a supercharging turbocompressor (2) comprising a driving turbine (3) driven by exhaust gases flowing through the exhaust manifold (4) of the engine (1) and a compressor (5) for supplying compressed air to the air intake pipe (6) of the engine (1); the system comprising

an exhaust valve (waste-gate) (7) coupled to the exhaust manifold (4) of the engine (1) upstream of the turbine (3),

a pneumatically controlled actuating device (8) for controlling the opening of the valve (7) in dependence on the pneumatic pressure supplied to an operating chamber (8a) of the actuator (8),

an operating solenoid valve (9) for putting the operating chamber (8a) of the actuator (8) into communication with the inlet manifold (6) of the engine (1),

a first electrical pressure sensor (11) coupled to the inlet manifold (6) of the engine,

a plurality of further sensors (13) for supplying electrical signals indicative of the operating conditions of the engine (1), and

an electronic control unit (20) arranged to operate the solenoid valve (9) according to a predetermined law in dependence on the signals provided by the further sensors (13),

characterised in that it includes a second pressure sensor (12) for monitoring the pressure in the operating chamber (8a) of the actuator (8) and in that the electronic control unit (20) is arranged

- to acquire the signals supplied by the second pressure sensor (12) and to contro, in a closed loop, the operation of the solenoid valve (9) in dependence on the signals supplied by the second pressure sensor (12), and
- to acquire the signal supplied by the first pressure sensor (11) when the further sensors (13) detect the occurrence of a predetermine operating condition of the engine (1) and to modify the predetermined law in dependence on the signal from the first pressure sensor.

## Patentansprüche

System zur Steuerung der Arbeitsweise eines Verbrennungsmotors (1), der mit einem vorverdichtenden Turbokompressor (2) versehen ist, der eine treibende Turbine (3), die von den Abgasen angetrieben wird, die durch das Auspuffsammelrohr (4) des Motors (1) strömen, sowie einen Kompressor (5) besitzt, um dem Luftansaugrohr (6) des Motors (1) Druckluft zuzuführen; wobei das System enthält:

ein Auslaßventil (Abgasventil) (7), das mit dem Auspuffsammelrohr (4) des Motors (1) stromaufwärts der Turbine (3) verbunden ist,

ein pneumatisch gesteuertes Stellglied (8), um das öffnen des Ventils (7) in Abhängigkeit vom Luftdruck zu steuern, der einer Betriebskammer (8a) des Stellglieds (8) zugeführt wird,

ein Magnetventil (9), um die Betriebskammer (8a) des Stellglieds (8) mit dem Ansaugrohr (6) des Motors (1) in Verbindung zu bringen,

einen ersten elektrischen Druckfühler (11), der mit dem Ansaugrohr (6) des Motors verbunden ist,

eine Vielzahl von weiteren Fühlern (13), um elektrische Signale zu liefern: die die Betriebszustände des Motors (1) anzeigen, und

eine elektronische Steuereinheit (20), die angeordnet ist, um das Magnetventil (9) in Übereinstimmung mit einem vorgegebenen Gesetz in Abhängigkeit von den Signalen zu betätigen, die von den weiteren Fühlern (13) geliefert werden,

dadurch gekennzeichnet, daß das System einen zweiten Druckfühler (12) aufweist, um den Druck in der Betriebskammer (8a) des Stellglieds (8) zu überwachen, und daß die elektronische Steuereinheit (20) so aufgebaut ist, um die vom zweiten Druckfühler (12) gelieferten Signale zu erhalten und in einem geschlossenen Regelkreis die Betätigung des Magnetventils (9) in Abhängigkeit von den Signalen zu steuern, die vom zweiten Druckfühler (12) geliefert werden, und das vom ersten Druckfühler (11) gelieferte Signal zu erhalten, wenn die weiteren Fühler (13) das Auftreten eines vorgegebenen Betriebszustands des Motors (1) abtasten, und das vorgegebene Gesetz in Abhängigkeit von dem Signal des ersten Druckfühlers zu ändern.

## Revendications

Système pour commander le fonctionnement d'un moteur à combustion interne (1) prévu avec un turbocompresseur à suralimentation (2) comprenant une turbine d'entraînement (3) entraînée par des gaz d'échappement circulant à travers le collecteur d'échappement (4) du moteur (1) et un compresseur (5) pour fournir de l'air comprimé à la conduite d'aspiration d'air (6) du moteur (1); le système comprenant:

une soupape d'échappement (sortie de combustion) (7) couplée au collecteur d'échappement (4) du moteur (1) en amont de la turbine (3),
un dispositif d'actionnement pneumatiquement commandé (8) pour commander l'ouverture d'une soupape (7) en fonction de la pression pneumatique fournie à une chambre de commande (8a) de l'actionneur (8),
une électro-vanne de commande (9) pour mettre la chambre de commande (8a) de l'actionneur (8) en communication avec le collecteur d'admission (6) du moteur (1),
un premier capteur électrique de pression (11) couplé au collecteur d'admission (6) du moteur,
une multitude d'autres capteurs (13) pour délivrer des signaux électriques représentatifs des conditions de fonctionnement du moteur (1), et
une unité de commande électronique (20) agencée pour commander l'électro-vanne (9) conformément à une loi prédéterminée en fonction des signaux délivrés par les autres capteurs (13), caractérisé en ce qu'il comprend un second capteur de pression (12) pour contrôler la pression dans la chambre de commande (8a) de l'actionneur (8) et en ce que l'unité de commande électronique (20) est agencée de façon à
— acquérir les signaux délivrés par le second capteur de pression (12) et commander, dans une boucle fermée, le fonctionnement de l'électro-vanne (9) en fonction des signaux délivrés par le second capteur de pression (12) et
— acquérir le signal délivré par le premier capteur de pression (11) lorsque les autres capteurs (13) détectent la présence d'une condition de fonctionnement pré-déterminée du moteur (1) et modifier la loi pré-déterminée en fonction du signal provenant du premier capteur de pression.

ELECTRONIC CONTROL UNIT

20

EP 0 277 466 B1